# EUROPEAN PATENT SPECIFICATION

(11) **EP 4 037 157 B1**
(45) Date of publication and mention of the grant of the patent: **03.04.2024**
(21) Application number: 22151832.7
(22) Date of filing: 17.01.2022
(51) Int. Cl.: H02K 3/52, H02K 3/50, H02K 3/38

(54) **STATOR OF ELECTRIC MACHINE AND ELECTRIC MACHINE**
STATOR EINER ELEKTROMASCHINE UND ELEKTROMASCHINE
STATOR DE MACHINE ÉLECTRIQUE ET MACHINE ÉLECTRIQUE

(30) Priority: 27.01.2021 CN 202110112598
(43) Date of publication of application: 03.08.2022
(73) Proprietor: ABB Schweiz AG, 5400 Baden (CH)
(72) Inventor: LIN, Fengqing, Shanghai, 201600 (CN); SU, Yun, Shanghai, 201620 (CN); XIE, Guangming, Shanghai, 201600 (CN)
(74) Representative: Zimmermann & Partner Patentanwälte mbB

(56) References cited:
- CN-A- 104 836 358
- DE-A1- 10 327 960
- DE-U1-202008 016 729
- JP-B2- 5 453 881
- JP-B2- 6 596 222
- US-A1- 2001 006 312
- US-A1- 2016 036 279
- US-A1- 2017 244 299

## Description

### FIELD

The present disclosure relates to the technical field of electric machines, and more specifically to a stator of an electric machine and an electric machine having the stator.

### BACKGROUND

A stator is an important part of the electric machine. As the stator of the motor, an energized stator winding may be used to generate a rotating magnetic field that interacts with the rotor; as the stator of a generator, the stator winding may interact with a rotor magnetic field to output electricity. The stator winding may generally be composed of a plurality of coils or coil groups. In an electric machine such as a servo motor, the plurality of coils or coil groups within the stator windings may be connected to one another by a suitable wire. A wire-connecting manner, arrangement of the wire and a wire-fixing manner in the stator winding may not only affect the manufacturing cost of the electric machine, but also affect the axial design length of the electric machine.

For small-sized servo motors, for example, there is a tendency to fix the wire of the stator winding to a circuit board by welding, without need to fix the end of the wire of the stator. However, this approach often suffers from poor welding and cannot be applicable for larger electric machines. For large-sized servo motors, for example, the stator winding may employ a terminal crimping manner to connect the wire. However, when the terminal crimping manner is employed, there are many problems regarding the fixing of the wire-connecting end of the stator winding, for example, how to effectively reduce the height of the wire-connecting end and thereby reduce the axial length of the electric machine, and how to quickly, simply and efficiently fix the wire-connecting end. At present, there are no means for effectively solving these problems. JP6596222B2 discloses an insulating cover 34 which is arranged so as to cover a coil end part 31a on an insulating bobbin 33 arranged on an upper end surface of a stator core 30b and is assembled to the insulating bobbin 33. A position L1 of a lower end of the insulating cover 34 is located above a position L2 of an upper end of the coil end part 31a. JP 5453881B2 discloses a coil guide recess 864 in an insulator 8 used for a motor, which is formed so as to leave a coil tangling protrusion 863 between a coil tangling first groove 861 and a coil tangling second groove 862. With this configuration, the winding end 62 of a coil 6 can be hooked on the coil tangling protrusion 863 from a coil winding portion 80 through the coil tangling first groove 861, the coil guiding recess 864 and the coil tangling second groove 862. Thus, since the winding end 62 of the coil 6 is reliably fixed, the coil 6 can be prevented from being unwound. US 2017/244299 A1 discloses an endcap assembly for an electric motor and stator comprising the same. The endcap assembly includes an endcap. a first wire, and two terminals corresponding to the first wire. The two terminals are fixed to the endcap and configured to connect with corresponding windings of the electric motor. The endcap defines a first accommodating groove extending from one terminal to the other terminal. The first wire is received in the first accommodating groove, and two ends of the first wire are electrically connected to the two terminals. respectively.

### SUMMARY

Embodiments of the present invention provide a stator of an electric machine and an electric machine including the stator, which can effectively reduce and limit the axial length of the stator of the electric machine, thereby shortening the total axial length of the electric machine, and reducing the manufacturing cost of the electric machine.

According to the invention, there is provided a stator of an electric machine, the stator comprising: a plurality of stator poles arranged around a central axis and coupled to one another; a stator winding comprising a plurality of coils wound respectively on the plurality of stator poles, the plurality of coils being electrically connected to one another in the vicinity of axial ends of the plurality of stator poles and forming a plurality of connection portions; and an annular member disposed at the axial ends of the plurality of stator poles and coupled to the plurality of stator poles, the annular member together with the plurality of stator poles enclosing a space for constraining the plurality of connection portions.

In the invention, the stator further comprises a snap-fitting mechanism through which the annular member is coupled to the plurality of stator poles.

In the invention, the snap-fitting mechanism comprises a plurality of projections respectively disposed on at least a part of the plurality of stator poles near the axial ends, and a plurality of catching slots disposed on the annular member and respectively corresponding to the plurality of projections, each of the plurality of projections being engaged in the corresponding catching slot, so that relative movement between the annular member and the plurality of stator poles is restricted.

In the invention, the plurality of catching slots comprise closed catching slots and open catching slots arranged along a circumference of the annular member, the closed catching slots being configured to block the corresponding projections from entering and leaving the closed catching slots, and the open catching slots being configured to not block the corresponding projections from entering and leaving the open catching slots.

In some embodiments of the invention, each projection has a gradually decreasing projection height in a direction toward the axial end, so that each projection is easy to enter the closed catching slot on the annular member and is hard to leave the closed closing slot on the annular member.

In some embodiments of the invention, each stator pole is a separate stator block and comprises an iron core and an insulating frame disposed on the iron core, the plurality of coils are respectively wound on the corresponding insulating frames, and/or the projections are disposed on the insulating frames and project from the insulating frames in a radial direction.

In some embodiments of the invention, the annular member comprises at least some of the following: an annular end face perpendicular to the central axis; an outer wall face extending from an outer radial edge of the annular end face in a direction parallel to the central axis X toward the plurality of stator poles, the catching slots being disposed on the outer wall face and running through the outer wall face in the radial direction; and/or an inner wall face extending from an inner radial edge of the annular end face in the direction parallel to the central axis toward the plurality of stator poles.

In some embodiments of the invention, the annular end face is provided with at least one hole for viewing the plurality of connection portions.

In some embodiments of the invention, the outer wall face and inner wall face of the annular member are respectively provided with an outer opening and an inner opening for connecting the stator winding to an external circuit.

According to a second aspect of the invention, there is provided an electric machine comprising: a rotor; and a stator according to the first aspect of the present invention.

It should be appreciated that this Summary is not intended to identify key features or essential features of the claimed subject matter, nor is it intended to be used to limit the scope of the claimed subject matter. Other features of this Summary will be made apparent through the following depictions.

### BRIEF DESCRIPTION OF THE DRAWINGS

Through the following detailed description with reference to the accompanying drawings, the above and other features, advantages and aspects of various embodiments of the present disclosure will become more apparent. Throughout the drawings, the same reference symbols generally refer to the same elements, wherein
FIG. 1 shows a schematic structural diagram of a stator of an electric machine according to an embodiment of the present invention;
FIG. 2 shows a partial perspective view of the stator with an annular member removed according to an embodiment of the present invention;
FIG. 3 shows a partial cross-sectional view of a stator according to an embodiment of the present invention;
FIG. 4 shows a perspective view of a stator pole wound with a stator coil according to an embodiment of the present invention;
FIG. 5A shows a perspective view of an annular member according to an embodiment of the present invention; and
FIG. 5B shows a cross-sectional view of an annular member according to an embodiment of the present invention.

### DETAILED DESCRIPTION OF EMBODIMENTS

Preferred embodiments of the present invention will be described as follows in greater detail with reference to the drawings. Although preferred embodiments of the present invention are illustrated in the drawings, it is to be understood that the present invention described herein can be implemented in various manners, not limited to the embodiments illustrated herein. Rather, these embodiments are provided to make the present invention described herein clearer and more complete and convey the scope of the present invention described herein completely to those skilled in the art. Those skilled in the art may obtain alternative technical solutions from the following description without departing from the scope of the invention, which is defined by the appended claims.

As used herein, the term "comprises" and its variants are to be read as open-ended terms that mean "comprises, but is not limited to." The term "or" is to be read as "and/or" unless the context clearly indicates otherwise. The term "based on" is to be read as "based at least in part on." The term "one example embodiment" and "an example embodiment" are to be read as "at least one example embodiment." The following text may also contain other explicit or implicit definitions.

The present invention proposes an improved stator structure of an electric machine. In this stator structure of the electric machine, there is provided an annular member for fixing a winding wire at an end of the stator, and such annular member is capable of constraining dispersedly-arranged connecting portions between the coils in a space between the annular member and the stator pole, thereby effectively reducing the peripheral size, especially the axial length, of the stator of the electric machine. In addition, the annular member can be fixed to the stator pole in an efficient and reliable manner, and therefore has advantages such as simple structure and convenient installation.

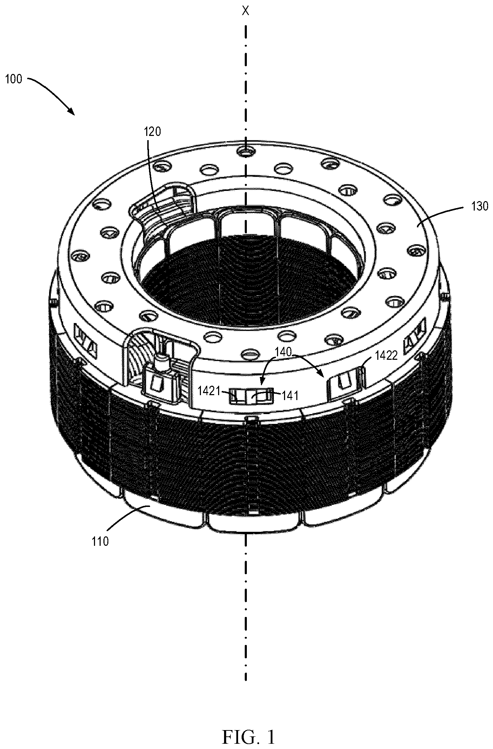

FIG. 1 shows a schematic structural diagram of a stator 100 of an electric machine according to an embodiment of the present invention. As an example, the stator 100 may have a generally annular shape, and may be an outer stator. Thus, an inner rotor may be disposed inside the stator 100. However, it is to be understood that the stator 100 may also be another type of stator, for example, the stator 100 may also be an inner stator, and thus the outer rotor may be disposed outside the stator 100.

According to an embodiment of the invention, as shown in FIG. 1, the stator 100 includes a plurality of stator poles 110 arranged around a central axis X and coupled to one another.

Specifically, a stator body composed of the plurality of stator poles 110 is an important part constituting a magnetic circuit of the electric machine, and may include a magnetic conductive portion made of a magnetically conductive material to form a magnetic flux path. In addition, the plurality of stator poles 110 may further include an insulating portion for mounting an excitation coil or winding for separating the excitation coil or winding from the magnetically conductive portion. The stator body may be integrally formed, or may be a split structure. In the case of the split structure, the plurality of stator poles 110 may be connected together in a suitable manner. For example, each stator pole 110 may be provided with an engagement portion at a position close to an adjacent stator pole, and engages with the adjacent stator pole. An example of such an engagement portion may include a positioning groove or positioning protrusion. For example, the stator pole 110 may have the positioning groove, and its adjacent stator poles 110 may have the positioning protrusion, so that when the stator pole 110 is coupled with the adjacent stator pole, the positioning groove of the stator pole 110 may engage with the positioning protrusion of the adjacent stator pole, so that two adjacent stator poles 110 may be fixed together reliably. However, it is to be understood that adjacent stator poles 110 may also be coupled in any suitable other manner, so that they are connected in turn to form the annular stator body.

The central axis X around which the plurality of stator poles 110 surround may be located at a central position of the stator 100, and may be, for example, a rotational axis of the rotor of the electric machine. A direction parallel to the central axis X may be referred to as an axial direction, and a direction along a radius or diameter of a circle centered on the central axis X may be referred to as a radial direction.

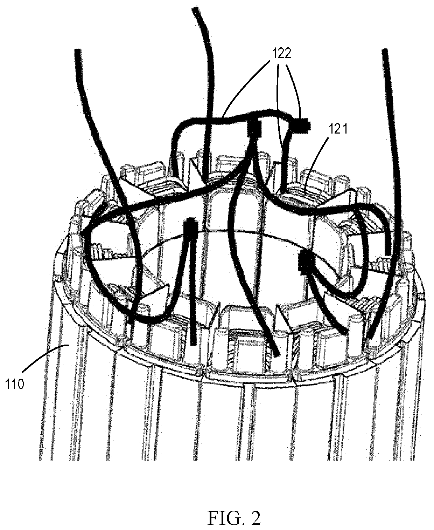

FIG. 2 shows a partial perspective view of the stator 100 after the annular member 130 in Fig. 1 is removed. Further description will be given below with reference to FIG. 1 and FIG. 2.

According to the invention, the stator 100 includes a stator winding 120, and the stator winding 120 includes a plurality of coils 121 wound on a plurality of stator poles 110, respectively. The plurality of coils 121 are electrically connected to one another in the vicinity of axial ends of the plurality of stator poles 110 and form a plurality of connection portions 122.

Specifically, the stator windings 120 provided on the plurality of stator poles 110 constitute a circuit part of the stator, and may be connected to an external circuit such as a driving circuit, a braking circuit, and a power supply network. The stator windings 120 may be three phase windings, or windings with any other number of phases. Each phase winding may typically consist of a plurality of winding wires interconnected, and there may also be some interconnection between the phase windings. These interconnections should follow a stator circuit design to achieve a specific circuit structure in the stator windings. Specifically, as shown in FIG. 2, a plurality of coils 121 are respectively wound on the plurality of stator poles 110. For example, each coil 121 may be wound on one stator pole 110 in a one-to-one correspondence manner, or each coil 121 may be wound on the plurality of stator poles 110. In order to achieve a certain circuit design in the stator windings, the plurality of coils 121 is connected at the axial ends of the stator poles 110, thereby forming a plurality of connection portions 122. Such a connection at the axial ends may be achieved by terminal crimping, e.g., by cold-rolled terminal crimping. In some embodiments, the plurality of connection portions 122 may be non-rigid, e.g., formed by loose wire ends of the respective coils 121.

However, in such a connection manner, these connection portions 122 are arranged dispersedly on the outside of the stator poles 110. If these connection portions 122 are not fixed in any way, these dispersedly-arranged connection portions 122 will greatly increase the size (especially the axial length) of the electric machine. At the same time, it can be seen that these connection portions 122 are distributed almost on the entire circumference of the stator body and have different extension lengths. Therefore, if the plurality of connection portions 122 are individually fixed in sequence (for example, a single connection portion 122 is fixed by certain means to limit its axial height), such a fixing efficiency will be very low and the reliability will be undesirable.

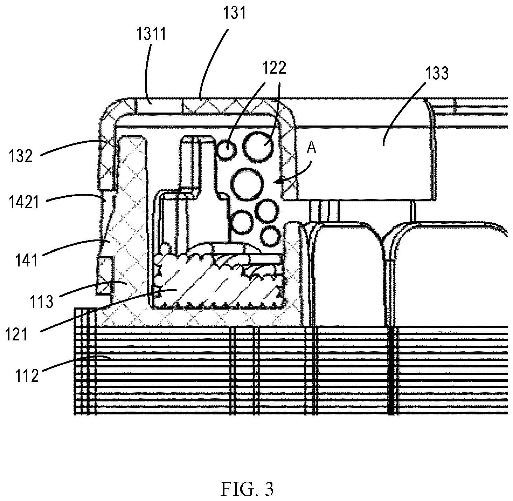

FIG. 3 shows a partial cross-sectional view of a stator 100 according to an embodiment of the present invention. Further description will be given below with reference to FIG. 1 and FIG. 3.

According to the invention, the stator 100 includes an annular member 130, which is disposed at axial ends of the plurality of stator poles 110 and coupled to the plurality of stator poles 110. The annular member 130 together with the plurality of stator poles 110 encloses a space A for constraining the plurality of connection portions 122. According to the invention, the annular member 130 is mechanically coupled to the plurality of stator poles, so that relative movement between the annular member 130 and the plurality of stator poles 110 is restricted. According to an the invention, the annular member 130 and the plurality of stator poles are mechanically fixed together. The coupling may be releasable and is realized by a snap-fit mechanism. The annular member 130 and the plurality of stator poles may be rigidly coupled to each other, so that the annular member 130 is firmly held in place at the plurality of stator poles.

Specifically, the annular member 130 provided at the end of the stator may be coupled to all or part of the stator poles 110, so that the space A may be formed between the annular member 130 and the stator poles 110, and the plurality of connection portions 122 is constrained in the space A. Obviously, the annular member 130 may press or confine the plurality of connection portions 122 in the space A, thereby preventing the connection portions 122 from bouncing up and extending beyond the inner diameter of the stator, and effectively reducing peripheral dimensions (such as the axial length and the radial length) of the stator. In addition, since the annular member 130 may constrain all the connection portions 122 on the circumference of the end of the stator in the space A at the same time, the use of the annular member 130 may effectively improve the fixing efficiency of the connection portions 122 as compared with a conventional manner.

In the invention, as shown in FIG. 1, the stator 100 includes a snap-fitting mechanism 140. The annular member 130 is coupled to the plurality of stator poles 110 by the snap-fitting mechanism 140. Specifically, in the snap-fitting manner, the annular member 130 and the plurality of stator poles 110 may be relatively fixed at a plurality of positions (i.e., the plurality of stator poles 110) simultaneously quickly after coming into contact with each other. In addition, the snap-fitting mechanism also has advantages such as easy implementation and high reliability. It will be appreciated that although FIG. 1 shows an exemplary snap-fitting mechanism 140, a snap-fitting mechanism with any other suitable structure in the scope of the claims may be disposed in the stator 100.

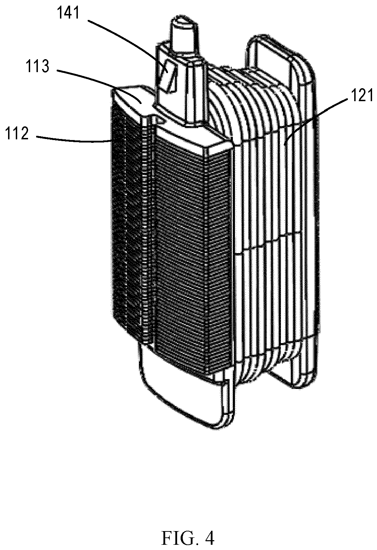

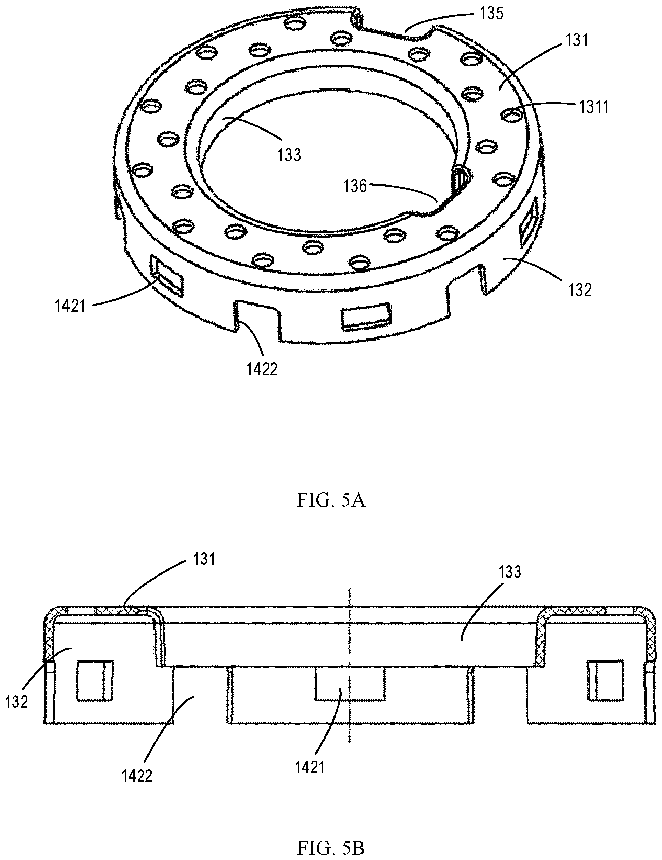

FIG. 4 shows a perspective view of the stator pole 110 on which the stator coil 121 is wound. FIG. 5A shows a perspective view of the annular member 110, and FIG. 5B shows a cross-sectional view of the annular member 110. Further description will be given below with reference to FIG. 1, FIG. 3, FIG. 4, FIG. 5A and Fig. 5B.

In the invention, the snap-fitting mechanism 140 includes a plurality of projections 141 respectively disposed on at least a part of the stator poles 110 near the axial ends, and includes a plurality of catching slots 1421, 1422 disposed on the annular member 130 and respectively corresponding to the plurality of projections 141, respectively; each of the plurality of projections 141 is engaged in the corresponding catching slots 1421, 1422, so that the relative movement between the annular member 130 and the plurality of stator poles 110 is restricted.

As shown in FIG. 1, FIG. 3 and FIG. 4, each stator pole 110 may be provided with the projection 141, and these projections 141 may be located close to the axial ends to facilitate engagement with the annular member 130. As shown in FIG. 1, FIG. 3 and FIG. 5A and FIG. 5B, the annular member 130 is provided with a plurality of catching slots 1421 and 1422 , and the catching slots 1421 and 1422 are located at positions corresponding to the plurality of projections 141 to facilitate alignment and engagement with the projections 141.

When the annular member 130 moves in the axial direction close to the stator body including the plurality of stator poles 110, the catching slots 1421 and 1422 of the annular member 130 may be aligned with the projections 141 of the stator poles 110. As the catching slots 1421 and 1422 are snap-fitted with the projections 141, the annular member 130 and the plurality of stator poles 110 can no longer perform relative movement including axial movement and radial movement. Meanwhile, the annular member 130, while being coupled to the stator poles 110, may press or constrain the plurality of connection portions 122, thereby confining the connecting portions 122 in the space A between the annular member 130 and the plurality of stator poles 110.

In some embodiments of the invention, the plurality of catching slots 1421 and 1422 include closed catching slots 1421 and open catching slots 1422 which are alternately arranged in a circumferential direction of the annular member 130. The closed catching slots 1421 are configured to block the corresponding projections 141 from entering and leaving the closed catching slots 1421. The open catching slots 1422 are configured to not block the corresponding projections 141 from entering and leaving the open catching slots 1422.

Specifically, the catching slots 1421, 1422 includes two types of catching slots, namely, the first type of catching slots 1421 and the second type of catching slot 1422 shown in FIG. 1 and FIG. 5A and FIG. 5B, and the two types may each include a plurality of catching slots. The catching slots 1421 are closed catching slots, and such closed catching slots will block the projections 141 from entering the catching slots to a certain extent during the snap-fitting process. However, once the blocking effect is overcome, the projections 141 will enter into the catching slots and be reliably fixed in the catching slots (in other words, the catching slots 1421 can block the projections 141 from leaving the catching slots). On the other hand, the catching slots 1422 are open catching slots with an open structure. This means that during the coupling of the annular member 130 to the stator poles 110, the projections 141 may enter the catching slots 1422 unobstructed. Meanwhile, when the annular member 130 is detached from the stator poles 110, the projections 141 may also leave the catching slots 1422 unobstructed. It should be appreciated that, although in the process of coupling and decoupling between the annular member 130 and the plurality of stator poles 110, the catching slots 1422 are structured such that they do not prevent the projections 141 from entering or leaving the catching slots, but the catching slots 1422 still have a limiting effect on the projections 141, for example, the catching slots 1422 may limit the movement of the projections 141 in the catching slots 1422 in a direction different from the mounting direction of the annular member 130 (for example, the circumferential direction), thereby still facilitating the fixation between the annular member 130 and the plurality of stator poles 110.

It is possible to, by arranging a portion of open catching slots 1422, reduce the mounting resistance when the annular member 130 is mounted to the plurality of stator poles 130, and accomplish the mounting with less force, thereby effectively reducing the mounting difficulty. At the same time, since the catching slots 1421 and 1422 are alternately arranged in the circumferential direction of the annular member 130, the mounting resistance may be made more uniform, and the stable coupling between the annular member and the stator poles may still be ensured in the case where the mounting resistance is reduced. However, it should be understood that in other embodiments, the open catching slots 1422 and the closed catching slots 1421 may not be alternately arranged, for example, two or more adjacent catching slots may be open catching slots 1422, or two or more adjacent catching slots may be closed catching slots 1421. Such an arrangement can also reliably engage the annular member 130 to the stator poles 110.

In some embodiments of the present invention, each projection 141 may have a gradually decreasing projection height in a direction toward the axial end, so that each projection 141 is easy to enter the closed catching slot 1421 on the annular member 130 and is hard to leave the closed closing slot 1421 on the annular member 130. The projection height may be defined as the projection height in radially outwardly direction relative to the axis X.

Specifically, as described above, in the process of coupling or mounting the annular member 130 to the plurality of stator poles 110, the closed catching slots 1421 will block the projections 141 from entering the catching slots to a certain extent. In order to reduce this mounting resistance, the projections 141 may be designed as projections with varying heights, and the heights of the projections may gradually increase from a position close to the axial end to a position away from the axial end. Thereby, it is possible to guide the closed catching slots 1421 to engage with the projections 141 during the mounting process of the annular member 130. At the same time, after the snap-fitting process is completed, since the projections 141 have a higher projection height at a position away from the axial end, the projections 141 can be firmly snapped into the closed catching slots 1421 without easily disengaging from the closed catching slots 1421. As an example, as shown in FIG. 3, the projections 141 may have a triangular-shaped cross-section, which may guide edges of the closed catching slots 1421 to slide along an inclined surface of the projections 141 and complete final snap-fitting connection, and right-angled sides of the triangular cross-section enables the projections 141 to be firmly engaged in the catching slots 1421. It may be understood that the projections 141 may also have other cross-sectional shapes with varying heights, as long as such cross-sectional shapes can effectively guide the access to the catching slots and ensure the stable installation of the catching slots.

In an embodiment of the present invention, each stator pole 110 may be a separate stator block, and each stator pole 110 may include an iron core 112 and an insulating frame 113 disposed on the iron core 112, a plurality of coils 121 are respectively wound on the corresponding insulating frames 113, and the projections 141 may be disposed on the insulating frames 113 and project from the insulating frames 113 in the radial direction.

The stator pole 110 may be a block structure, which makes the wire wound on the stator pole 110 more conveniently and facilitates fulfilment of an automated operation. In the block structure, each stator pole has a separate iron core 112, and each iron core 112 may be formed by stacking magnetically conductive sheets. However, each iron core 112 may also be integrally formed of a magnetic material, or formed in other ways. The iron cores 112 of adjacent stator poles may be engaged with each other by, for example, positioning grooves and positioning protrusions. The insulating frame 113 may be mounted on the iron core 112 to facilitate winding of the coil 121 and insulatingly separate the iron core 112 from the coil 121. As an example, the insulating frame 113 may be mounted on the iron core 112 by casting or injection molding, thereby achieving the effective fixation of the insulating frame 113 and the iron core 112. To facilitate the winding of the coil 121, the insulating frame 113 may be provided with a wire groove portion suitable for winding the coil 121, and may also be provided with a baffle portion preventing the coil 121 from moving laterally (or radially). The projection 141 may be disposed on the insulating frame 113 and projects radially from the insulating frame 113. For example, the projection 141 may be disposed on the baffle portion on a radially outer side of the insulating frame 113. However, the projection 141 may also be formed on other parts of the insulating frame 113. The projection 141 may be integrally formed with the insulating frame 113, for example, the projection 141 may be integrally formed with the insulating frame 113 during injection molding or casting. In addition, the projection 141 may also be mounted and fixed to the insulating frame 113 as a separate component in any suitable manner.

It may be appreciated that the projection 141 may also be formed on the core portion of the stator pole 110. For example, the projection 141 may be disposed on the radially outer side of the iron core, whereby the projection 141 may be part of the radially outer side of the iron core 112, or the projection 141 may also be a separate part and fixed to the radially outer side of the iron core 112 in a certain manner. However, the projection 141 disposed on the insulating frame 113 has a better technical effect than the projection 141 being disposed on the iron core 112, because the insulating frame 113 is closer to the stator end and thus is easier to install. In addition, since the insulating frame is generally formed by injection molding or casting, it is relatively easy to form the projection 141 having a specific shape on the insulating frame 113, and the projection 141 thus formed is more stable.

In addition, the projection 141 may also protrude from the insulating frame 113 in other directions. However, as compared with other directions, the projection 141 protruding from the insulating frame 113 in the radial direction may effectively limit the axial movement of the annular member 130, thereby facilitating the mounting and fixation of the annular member 130.

In some embodiments of the present invention, as shown in FIG. 5A and FIG. 5B, the annular member 130 may include an annular end face 131, an outer wall face 132 and an inner wall face 133. The annular end face 131 is perpendicular to the central axis X. The outer wall face 132 extends from the outer radial edge of the annular end face 131 in a direction parallel to the central axis X toward the plurality of stator poles 110, and the catching slots 1421, 1422 are disposed on the outer wall faces 132 and run through the outer wall face 132 in the radial direction. The inner sidewall surface 133 extends from the inner radial edge of the annular end face 131 in the direction parallel to the central axis X toward the plurality of stator poles 110.

The annular end face 131, the outer wall face 132 and the inner wall face 133 of the annular member 130 enclose at the ends of the plurality of stator poles 110, and thus form the space A that accommodates and constrains the plurality of connection portions 122. The annular end face 131 may restrict the plurality of connection portions 122 from extending in the axial direction, and the outer wall face 132 and the inner wall face 133 may constrain the plurality of connection portions 122 from extending in the radial direction. Thus, the plurality of connection portions 122 may be confined or constrained in a small limited space, which effectively reduces the peripheral sizes of the stator of the electric machine.

The catching slots 1421 and 1422 may be openings on the outer wall face 132, and the shape of the openings may be for example a rectangle. The plurality of projections 141 pass through the outer wall face 132 in the radial direction through the catching slots 1421 and 1422 to clamp the annular member 130 in the entire circumferential direction of the end of the stator, thereby effectively restricting relative movement between the annular member 130 and the plurality of stator poles 110. It may be appreciated that the catching slots 1421 and 1422 may also be formed on the inner wall face of the annular member 130, and thus the projections 141 may be formed radially inside the stator poles 110. However, in contrast, it is more advantageous to arrange the snap-fitting mechanism on the radially outer side, because the radially outer side has a longer circumferential boundary, and more combinations of projections and catching slots may be provided, so that the engagement on the radially outer side provides a better mounting effect.

In some embodiments of the present invention, the annular end face 131 is provided with at least one hole 1311 for viewing the plurality of connection portions 122. Specifically, at least one hole 1311 may be provided to facilitate viewing the winding condition in the space A of the annular member 130. Thus, the arrangement and connection of the connection portions 122 in the annular member 130 may be observed without detaching the annular member 130 from the plurality of stator poles 110, to facilitate the operator's subsequent processing.

In some embodiments of the present invention, the outer wall face 132 and the inner wall face 133 of the annular member 130 are respectively provided with an outer opening 135 and an inner opening 136 for connecting the stator winding 120 to an external circuit. Specifically, arranging the inner opening and outer opening for leading out the wire may meet different requirements of the structure of the electric machine. For example, for the electric machine without a brake, it will be more convenient to lead out the wire from the inner side, while for an electric machine with a brake, it will be more convenient to lead out the wire from the outer side. Therefore, the annular member 130 provided with the inner opening as well as the outer opening can be adapted to more different structures of the electric machines, and thus be applied in a larger scope.

In the solution of the present invention, it is possible to, by providing the annular member at the end of the stator, reduce and limit the axial length of the stator and thereby shorten the total axial length of the electric machine. Such an annular member exhibits a simple structure, a low cost and convenient installation, and may reduce the manufacturing cost of the electric machine.

According to another embodiment of the present invention, there is provided an electric machine that may include the stator 100 and a rotor. As an example, the electric machine may be a servo motor. Due to the use of the stator 100, the outer dimensions of the electric machine (especially the axial length of the electric machine) may be effectively reduced with low cost and simple and convenient installation operations.

Through the teaching given by the above depictions and related figures, many modifications and other embodiments of the present disclosure will be apparent to those skilled in the art. Therefore, it is to be appreciated that the embodiments of the present disclosure are not limited to the disclosed specific embodiments, and modifications and other embodiments are intended to be comprised within the scope of the present disclosure. In addition, while the above description and related figures have described example embodiments in the context of certain example combinations of components and/or functions, it should be appreciated that different combination forms of the components and/or functions may be provided by alternative embodiments without departing from the scope of the present disclosure. In this regard, for example, other combination forms of components and/or functions that are different from those explicitly described and that are within the scope of the claims are also contemplated as being within the scope of the present disclosure. Although specific terms are employed herein, they are used in a generic and illustrative sense and are not intended to be limiting.

## Claims

1. A stator (100) for an electric machine, comprising:
a plurality of stator poles (110) arranged around a central axis (X) and coupled to one another;
a stator winding (120) comprising a plurality of coils (121) wound respectively on the plurality of stator poles (110), the plurality of coils (121) being electrically connected to one another in the vicinity of axial ends of the plurality of stator poles (110) and forming a plurality of connection portions (122); and
an annular member (130) disposed at the axial ends of the plurality of stator poles (110) and coupled to the plurality of stator poles (110), the annular member (130) together with the plurality of statorpoles (110) enclosing a space (A) for constraining the plurality of connection portions (122);
wherein the annular member comprises:
a snap-fitting mechanism (140) through which the annular member (130) is coupled to the plurality of stator poles (110);
wherein the snap-fitting mechanism (140) comprises a plurality of projections (141) respectively disposed on at least a part of the plurality of stator poles (110) near the axial ends, and a plurality of catching slots (1421, 1422) disposed on the annular member (130) and respectively corresponding to the plurality of projections (141);
wherein each projection (141) of the plurality of projections (141) is engaged in the corresponding catching slot (1421, 1422) so that relative movement between the annular member (130) and the plurality of stator poles (110) is restricted;
**characterized in that** the plurality of catching slots (1421, 1422) comprise closed catching slots (1421) and open catching slots (1422) arranged along a circumference of the annular member (130), the closed catching slots (1421) are configured to block the corresponding projections (141) from entering and leaving the closed catching slots (1421), and the open catching slots (1422) are configured to not block the corresponding projections (141) from entering and leaving the open catching slots (1422).

2. The stator (100) according to claim 1, wherein each projection (141) has a gradually
decreasing projection height in a direction toward the axial end, so that each projection (141) is easy to enter the closed catching slot (1421) on the annular member (130) and is hard to leave the closed closing slot (1421) on the annular member (130).

3. The stator (100) according to any of the preceding claims, wherein each statorpole (110) is a separate stator block and comprises an iron core (112) and an insulating frame (113) disposed on the iron core (112), the plurality of coils (121) are respectively wound on the corresponding insulating frames (113), and the projections (141) are disposed on the insulating frames (113) and project from the insulating frames (113) in a radial direction.

4. The stator (100) according to any of claims 1-2, wherein the annular member (130) comprises:
an annular end face (131) perpendicular to the central axis (X);
an outer wall face (132) extending from an outer radial edge of the annular end face (131) in a direction parallel to the central axis (X) toward the plurality of statorpol es (110), the catching slots (1421, 1422) being disposed on the outer wall face (132) and running through the outer wall face (132) in the radial direction; and
an inner wall face (133) extending from an inner radial edge of the annular end face (131) in the direction parallel to the central axis (X) toward the plurality of statorpoles (110).

5. The stator (100) according to claim 4, wherein the annular end face (131) is provided with at least one hole (1311) for viewing the plurality of connection portians (122).

6. The stator (100) according to claim 4 or 5, wherein the outer wall face (132) and inner wall face (133) of the annular member (130) are respectively provided with an outer opening (135) and an inner opening (136) for connecting the stator winding (120) to an external circuit.

7. An electric machine, comprising:
a rotor; and
a stator (100) according to any of claims 1-6.

## Patentansprüche

1. Stator (100) für eine elektrische Maschine, umfassend:
eine Vielzahl von Statorpolen (110), die um eine Mittelachse (X) angeordnet und miteinander gekoppelt sind;
eine Statorwicklung (120), die eine Vielzahl von Spulen (121) umfassen, die jeweils um die Vielzahl von Statorpolen (110) gewickelt sind, wobei die Vielzahl von Spulen (121) in der Nähe der axialen Enden der Statorpole (110) elektrisch miteinander verbunden sind und eine Vielzahl von Verbindungsabschnitten (122) bilden; und
ein ringförmiges Element (130), das an den axialen Enden der Vielzahl der Statorpole (110) angeordnet und mit der Vielzahl von Statorpolen (110) gekoppelt ist, wobei das ringförmige Element (130) zusammen mit der Vielzahl der Statorpole (110) einen Raum (A) einschließt, um die Vielzahl der Verbindungsabschnitte (122) zu begrenzen;
wobei das ringförmige Element umfasst:
einen Schnappverschlussmechanismus (140), durch den das ringförmige Element (130) mit der Vielzahl der Statorpole (110) verbunden ist;
wobei der Schnappverschlussmechanismus (140) eine Vielzahl von Vorsprüngen (141) umfasst, die jeweils an mindestens einem Teil der Vielzahl von Statorpolen (110) in der Nähe der axialen Enden angeordnet sind, und eine Vielzahl von Fangschlitzen (1421, 1422), die an dem ringförmigen Element (130) angeordnet sind und jeweils mit der Vielzahl von Vorsprüngen (141) korrespondieren;
wobei jeder Vorsprung (141) der Vielzahl von Vorsprüngen (141) in den korrespondierenden Fangschlitz (1421, 1422) eingreift, so dass die Relativbewegung zwischen dem ringförmigen Element (130) und der Vielzahl von Statorpolen (110) eingeschränkt wird;
**dadurch gekennzeichnet, dass** die Vielzahl von Fangschlitzen (1421, 1422) geschlossene Fangschlitze (1421) und offene Fangschlitze (1422) umfassen, die entlang eines Umfangs des ringförmigen Elements (130) angeordnet sind, wobei die geschlossenen Fangschlitze (1421) so konfiguriert sind, dass sie die korrespondierenden Vorsprünge (141) daran hindern, in die geschlossenen Fangschlitze (1421) einzutreten und sie zu verlassen, und die offenen Fangschlitze (1422) so konfiguriert sind, dass sie die korrespondierenden Vorsprünge (141) nicht daran hindern, in die offenen Fangschlitze (1422) einzutreten und sie zu verlassen.

2. Stator (100) nach Anspruch 1, wobei jeder Vorsprung (141) in einer Richtung zum axialen Ende hin eine allmählich abnehmende Vorsprungs-Höhe hat, so dass jeder Vorsprung (141) leicht in den geschlossenen Fangschlitz (1421) am Ringelement (130) eintreten und nur schwer den geschlossenen Fangschlitz (1421) am Ringelement (130) verlassen kann.

3. Stator (100) nach einem der vorhergehenden Ansprüche, wobei jeder Statorpol (110) ein separater Statorblock ist und einen Eisenkern (112) und einen auf dem Eisenkern (112) angeordneten Isolierrahmen (113) umfasst, die Vielzahl von Spulen (121) jeweils auf die korrespondierenden Isolierrahmen (113) gewickelt sind, und die Vorsprünge (141) auf den Isolierrahmen (113) angeordnet sind und von den Isolierrahmen (113) in radialer Richtung abstehen.

4. Stator (100) nach einem der Ansprüche 1 - 2, wobei das ringförmige Element (130) umfasst:
eine ringförmige Endfläche (131), die senkrecht zur Mittelachse (X) steht;
eine äußere Wandfläche (132), die sich von einer äußeren radialen Kante der ringförmigen Endfläche (131) in einer Richtung parallel zur Mittelachse (X) zu der Vielzahl der Statorpole (110) erstreckt, wobei die Fangschlitze (1421, 1422) an der Außenwandfläche (132) angeordnet sind und durch die äußere Wandfläche (132) in radialer Richtung verlaufen; und
eine innere Wandfläche (133), die sich von einer inneren radialen Kante der ringförmigen Endfläche (131) in der Richtung parallel zur Mittelachse (X) zu der Vielzahl der Statorpole (110) erstreckt.

5. Stator (100) nach Anspruch 4, wobei die ringförmige Endfläche (131) mit mindestens einem Loch (1311) versehen ist, das den Blick auf die Vielzahl von Anschlussöffnungen (122) freigibt.

6. Stator (100) nach Anspruch 4 oder 5, wobei die äußere Wandfläche (132) und die innere Wandfläche (133) des ringförmigen Elements (130) jeweils mit einer äußeren Öffnung (135) und einer inneren Öffnung (136) zum Anschließen der Statorwicklung (120) an einen externen Stromkreis versehen sind.

7. Elektrische Maschine, umfassend:
einen Rotor; und
einen Stator (100) nach einem der Ansprüche 1-6.

## Revendications

1. Stator (100) pour une machine électrique, comprenant :
une pluralité de pôles de stator (110) agencés autour d'un axe central (X) et couplés les uns aux autres ;
un enroulement de stator (120) comprenant une pluralité de bobines (121) enroulées respectivement sur la pluralité de pôles de stator (110), la pluralité de bobines (121) étant électriquement connectées les unes aux autres dans le voisinage d'extrémités axiales de la pluralité de pôles de stator (110) et formant une pluralité de portions de connexion (122) ; et
un élément annulaire (130) disposé aux extrémités axiales de la pluralité de pôles de stator (110) et couplé à la pluralité de pôles de stator (110), l'élément annulaire (130), conjointement avec la pluralité de pôles de stator (110), enfermant un espace (A) pour restreindre la pluralité de portions de connexion (122) ;
dans lequel l'élément annulaire comprend :
un mécanisme d'ajustement à encliquetage (140) par l'intermédiaire duquel l'élément annulaire (130) est couplé à la pluralité de pôles de stator (110) ;
dans lequel le mécanisme d'ajustement à encliquetage (140) comprend une pluralité de saillies (141) respectivement disposées sur au moins une partie de la pluralité de pôles de stator (110) près des extrémités axiales, et une pluralité de fentes d'accrochage (1421, 1422) disposées sur l'élément annulaire (130) et correspondant respectivement à la pluralité de saillies (141) ;
dans lequel chaque saillie (141) de la pluralité de saillies (141) est engagée dans la fente d'accrochage correspondante (1421, 1422) pour qu'un mouvement relatif entre l'élément annulaire (130) et la pluralité de pôles de stator (110) soit limité ;
**caractérisé en ce que** la pluralité de fentes d'accrochage (1421, 1422) comprennent des fentes d'accrochage fermées (1421) et des fentes d'accrochage ouvertes (1422) agencées le long d'une circonférence de l'élément annulaire (130), les fentes d'accrochage fermées (1421) sont configurées pour empêcher les saillies correspondantes (141) d'entrer dans, et de quitter, les fentes d'accrochage fermées (1421), et les fentes d'accrochage ouvertes (1422) sont configurées pour ne pas empêcher les saillies correspondantes (141) d'entrer dans, et de quitter, les fentes d'accrochage ouvertes (1422).

2. Stator (100) selon la revendication 1, dans lequel chaque saillie (141) a une hauteur de saillie progressivement décroissante dans une direction vers l'extrémité axiale, pour que, pour chaque saillie (141), il soit facile d'entrer dans la fente d'accrochage fermée (1421) sur l'élément annulaire (130) et il soit difficile de quitter la fente de fermeture fermée (1421) sur l'élément annulaire (130).

3. Stator (100) selon l'une quelconque des revendications précédentes, dans lequel chaque pôle de stator (110) est un bloc de stator distinct et comprend un noyau de fer (112) et un bâti isolant (113) disposé sur le noyau de fer (112), la pluralité de bobines (121) sont respectivement enroulées sur les bâtis isolants correspondants (113), et les saillies (141) sont disposées sur les bâtis isolants (113) et font saillie à partir des bâtis isolants (113) dans une direction radiale.

4. Stator (100) selon l'une quelconque des revendications 1 et 2, dans lequel l'élément annulaire (130) comprend :
une face d'extrémité annulaire (131) perpendiculaire à l'axe central (X) ;
une face de paroi extérieure (132) s'étendant depuis un bord radial extérieur de la face d'extrémité annulaire (131), dans une direction parallèle à l'axe central (X), vers la pluralité de pôles de stator (110), les fentes d'accrochage (1421, 1422) étant disposées sur la face de paroi extérieure (132) et traversant la face de paroi extérieure (132) dans la direction radiale ; et une face de paroi intérieure (133) s'étendant depuis un bord radial intérieur de la face d'extrémité annulaire (131), dans la direction parallèle à l'axe central (X), vers la pluralité de pôles de stator (110).

5. Stator (100) selon la revendication 4, dans lequel la face d'extrémité annulaire (131) est pourvue d'au moins un trou (1311) pour voir la pluralité de portions de connexion (122).

6. Stator (100) selon la revendication 4 ou 5, dans lequel la face de paroi extérieure (132) et la face de paroi intérieure (133) de l'élément annulaire (130) sont respectivement pourvues d'une ouverture extérieure (135) et d'une ouverture intérieure (136) pour connecter l'enroulement de stator (120) à un circuit externe.

7. Machine électrique, comprenant :
un rotor ; et
un stator (100) selon l'une quelconque des revendications 1 à 6.
